# FASCICULE DE BREVET EUROPEEN

(11) **EP 1 353 812 B1**
(45) Date de publication et mention de la délivrance du brevet: **18.05.2005**
(21) Numéro de dépôt: 01985844.8
(22) Date de dépôt: 04.12.2001
(51) Int. Cl.: B60C 23/04

(54) **PROCEDE DE LOCALISATION DES ROUES D'UN VEHICULE AUTOMOBILE ET UNITE DE LOCALISATION CORRESPONDANTE**
ORTUNGSVERFAHREN FÜR DIE RÄDER EINES FAHRZEUGS UND ZUGEHÖRIGE ORTUNGSVORRICHTUNG
METHOD FOR AUTOMATICALLY LOCATING A MOTOR VEHICLE WHEEL AND CORRESPONDING LOCATING UNIT

(30) Priorité: 22.12.2000 FR 0016898
(43) Date de publication de la demande: 22.10.2003
(73) Titulaire: Siemens VDO Automotive S.A.S., 31036 Toulouse Cédex 01 (FR)
(72) Inventeur: LEFAURE, Philippe, F-31450 Montbrun Lauragais (FR)
(86) Numéro de dépôt international: PCT/EP2001/014174
(87) Numéro de publication internationale: WO 2002/051654

(56) Documents cités:
- US-A- 5 880 363

## Description

La présente invention concerne un procédé de localisation automatique des roues d'un véhicule automobile, et une unité de localisation correspondante.

Il est déjà connu de mesurer et de surveiller la pression régnant à l'intérieur des pneumatiques de chacune des roues d'un véhicule. La pression ainsi mesurée (et / ou d'autres paramètres) est transmise par un signal hautes fréquences à une unité centrale de calcul située dans le véhicule. Cette unité centrale a pour fonction de traiter les signaux reçus et d'informer le conducteur sur toute pression anormale des pneumatiques (ou élévation anormale de température, ...etc). En général cette unité centrale de calcul est disposée dans l'habitacle du véhicule et gère l'ensemble des fonctions mises en oeuvre dans cet habitacle. Pour que cette unité centrale de calcul traite correctement les signaux reçus, il est impératif qu'elle puisse en déterminer la provenance sans ambiguïté.

A cet effet, il existe des procédés (dits de localisation) permettant de déterminer où se situe la roue émettant un signal, mais ces procédés sont soit longs, soit onéreux, soit complexes et nécessitent souvent des temps de calcul importants avant de parvenir à assigner à chaque signal reçu un lieu d'émission précis sur le véhicule (par exemple, avant droit, avant gauche, arrière droit ou arrière gauche).

Un procédé de localisation correspondant au préambule de la revendication 1 est connu du document US-A-5 880 363.

La présente invention a pour but de localiser rapidement les roues d'un véhicule automobile. Le procédé selon l'invention doit en outre être automatique, fiable et économique. De préférence on cherche à réduire le coût de cette fonction de localisation en utilisant le moins possible de composants spécifiques.

A cet effet la présente invention concerne un procédé de localisation automatique des roues d'un véhicule automobile, le dit véhicule comportant une unité roue solidaire de chacune des roues du véhicule et une unité centrale de calcul disposée dans le véhicule, le dit procédé comportant les étapes suivantes :
- émission par l'unité roue de signaux hautes fréquences représentatifs, au moins, de la pression de la roue sur laquelle l'unité roue est montée, ainsi que d'un code identifiant cette roue,
- réception par l'unité centrale des signaux hautes fréquences émis par l'unité roue,
le dit procédé étant caractérisé en ce qu'il comporte en outre les étapes suivantes :
- émission d'un signal basses fréquences par au moins un dispositif d'émission monté sur le véhicule à proximité des roues selon une position prédéterminée de manière à réveiller les unités roues placées à proximité,
- réception de ce signal basses fréquences par les unités roue et en réponse, émission d'un signal hautes fréquences par les roues réveillées, le dit signal comportant au moins le code identifiant de des roues réveillées, et
- réception du signal hautes fréquences par l'unité centrale et association du code identifiant des unités roues réveillées, à la position du dispositif d'émission.

Ainsi, en plaçant le dispositif d'émission basses fréquences à proximité des roues d'un même essieu (par exemple), on est sûr que seules les roues de cet essieu répondront au signal basses fréquences émis par l'émetteur. En effet un signal basses fréquences ne peut être capté que dans un rayon d'action limité (par exemple 1 m).

Avantageusement l'émission du signal basses fréquences est effectuée par des antennes disposées dans les poignées, baguettes de protection, rétroviseurs,... et utilisées par ailleurs, par un dispositif de commande à distance de l'accès à bord du véhicule.

Ainsi ce sont les antennes qui servent déjà pour le verrouillage /déverrouillage du véhicule qui sont réutilisées ici, pour réveiller les unités électroniques de roues. En utilisant des antennes déjà existantes sur la plupart des véhicules on réduit le coût du procédé selon l'invention.

Bien entendu lorsque de telles antennes n'équipent pas déjà le véhicule il suffit de placer trois dispositifs d'émissions basses fréquences en regard de trois roues du véhicule pour repérer automatiquement ces trois roues. La dernière position de roue est déduite des trois positions trouvées.

Avantageusement encore, lorsque les antennes émettrices (dispositif d'émission) placées dans les poignées sont utilisées (ces antennes servant déjà à la commande de verrouillage / déverrouillage des ouvrants), le signal basses fréquences envoyé vers les unités roues, est un signal non codé, alors que lorsque ces antennes sont utilisées dans leur fonction de verrouillage /déverrouillage du véhicule, elles utilisent un signal basses fréquences codé. Ainsi il suffit de supprimer le codage pour localiser les roues. Là encore on réalise une économie substantielle.

La présente invention concerne également une unité de localisation des roues d'un véhicule automobile mettant en oeuvre le procédé ci-dessus décrit.

D'autres objets, caractéristiques et avantages de la présente invention ressortiront d'ailleurs de la description qui suit, à titre d'exemple non limitatif et en référence aux dessins annexés dans lesquels :
- **La figure 1** est une vue schématique d'un véhicule automobile muni d'une unité de localisation selon l'invention,
- **La figure 2** est une vue semblable à la figure 1 montrant une variante de réalisation de l'unité de localisation selon l'invention et,
- **La figure 3** est une vue schématique montrant l'unité de localisation selon la figure 1.

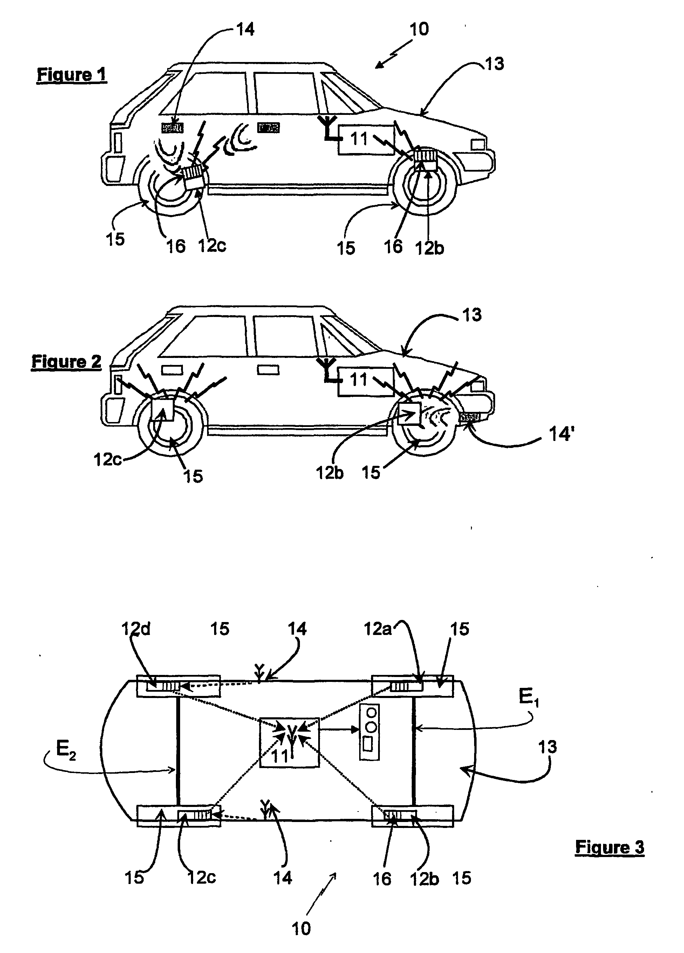

Selon la forme de réalisation montrée aux figures 1 et 3, l'unité de localisation 10 selon l'invention comporte :
- une unité centrale de calcul 11, placée dans un véhicule 13,
- une pluralité d'unité roue 12a à 12d solidaire chacune d'une des roues 15 du véhicule, et
- un dispositif d'émission 14 solidaire du véhicule et placé selon un position connue sur ce véhicule. Par exemple, à proximité des roues d'un même essieu (E₂ à la figure 1).

L'unité centrale de calcul 11 est un calculateur électronique gérant par exemple toutes les fonctions nécessaires dans l'habitacle d'un véhicule. De manière connue, un tel calculateur est habituellement placé sous la planche de bord (mais ceci n'est pas limitatif). Ce calculateur est muni d'une antenne réceptrice adaptée pour recevoir des signaux hautes fréquences typiquement dans la gamme de 315 MHz ou de 433 MHz. De tels signaux présentent la particularité d'avoir une très grande portée (par exemple 10 m) mais ne transportent pas d'énergie. Ces signaux sont couramment utilisés pour l'ouverture / fermeture des ouvrants à grande distance, le téléphone ou l'alarme.

Les unités roues 12a à 12d sont toutes semblables et comportent un capteur de pression de type connu (non détaillé ici) et un dispositif 16 de transmission RF (radio fréquence) des données mesurées. Ces dernières sont transmises à l'unité centrale 11 de manière régulière et / ou lorsqu'un événement déterminé le nécessite. D'autres paramètres peuvent également être transmis à l'unité centrale, par exemple la température du pneu, son accélération etc...Avec l'ensemble de ces paramètres l'unité roue transmet également un code identifiant qui lui est propre. L'ensemble de ces données est transmis à l'unité centrale 11, par un signal hautes fréquences.

Selon l'invention, pour déterminer le code identifiant de chaque roue on utilise un dispositif d'émission 14 placé sur le véhicule. Dans l'exemple illustré ce dispositif est placé à proximité d'un essieu déterminé.

Dans l'exemple représenté aux figures 1 et 3 ce dispositif d'émission est constitué par des antennes 14, de type connu, placées dans les portières arrières du véhicule pour permettre leur verrouillage / déverrouillage à distance. Sur commande de l'unité centrale 11, ces antennes émettent un signal basses fréquences (typiquement de l'ordre de 125 KHz). Un tel signal présente la particularité d'avoir une faible porté (1 m), et peut transporter de l'énergie. Il peut donc permettre le réveil d'un transpondeur situé dans l'unité roue.

Lorsque ces antennes sont utilisées pour localiser une roue, elles émettent un signal basses fréquences sinusoïdal non codé. Ainsi même si ce signal est capté par le dispositif de verrouillage / déverrouillage à distance, il n'est pas compris et ne provoque aucune ouverture intempestive du véhicule. Par contre ce signal non codé est reçu par le transponseur des unités roue situées dans la zone d'action de cette antenne (dans le cas présent, les roues arrières). Avantageusement en utilisant les antennes des portières arrière du véhicule seules les unités roues situées sur l'essieu arrière E₂ du véhicule peuvent capter ce signal. Les unités roues placées sur les roues de l'essieu avant E₁ sont trop loin (portée limitée à 1 m) et ne recoivent pas ce signal basses fréquences.

On notera, en variante que même si les antennes 14 des roues avant du véhicule émettent un signal basses fréquences en même temps que les antennes arrières, seules les roues arrières recevront ce signal. En effet la configuration habituelle d'un véhicule est telle qu'en général les antennes des poignées des roues avant sont plus proches des roues arrières que des roues avant.

Lorsque les unités roues de l'essieu arrière reçoivent ce signal basses fréquences, elles se réveillent (transpondeur) et envoient leurs données et leur code identifiant à l'unité centrale. De ce fait l'unité centrale 11 reçoit deux codes identifiant. Comme c'est l'unité centrale 11 qui a provoqué l'émission des signaux basses fréquences par les antennes des portières arrières, elle associe immédiatement ces codes identifiant aux roues arrière du véhicule. Par déduction l'unité centrale attribue les autres codes identifiant qu'elle reçoit aux roues avant du véhicule.

Pour des raisons de sécurité on attends que l'unité centrale ait attribué plusieurs fois de suite les mêmes codes identifiant aux mêmes roues pour considèrer que l'identification est fiable et définitive. Pendant le reste du trajet du véhicule, l'identification de la position des roues n'est alors plus effectuée.

On notera que selon l'invention l'association d'un code identifiant d'unité roue à une position sur le véhicule est réalisée à l'aide d'antennes déjà mises en place sur le véhicule (dans un tout autre but). L'intérêt de la présente invention réside essentiellement dans le fait que cette association (code identifiant / position) est effectuée sans ajouter d'élément supplémentaire sur le véhicule. En outre cette association est rapide, fiable et peu coûteuse.

En variante (figure 2) il est possible, lorsque le véhicule n'est pas déjà équipé d'antennes dans ses portières de monter des antennes spécifiques 14' à proximité des roues d'un même essieu (essieu avant E₁, par exemple, dans l'exemple représenté à la figure 2). Dans ce cas les roues qui envoient leur code identifiant suite à l'activation des antennes 14' sont les roues avant L'unité centrale attribue les deux autres codes identifiant aux roues arrière.

Bien entendu en utilisant un procédé de localisation des roues droites et gauches (non décrit ici), il est alors possible d'individualiser complètement l'ensemble des roues d'un véhicule et les codes identifiant correspondant.

En variante (non représentée) il est possible en utilisant trois dispositifs d'émission (spécifiques ou non) de provoquer la réponse de chacune des unités roues séparémment. L'unité centrale activant une par une chacune des antennes de roues reçoit une par une les réponses des unités roues. De ce fait l'unité centrale est en mesure d'associer un code identifiant à une position unique de roue du véhicule. La quatrième position est déduite. Lorsque ce procédé a été mis en oeuvre plusieurs fois et que les résultats sont stables, l'unité centrale considère que l'identification des codes est acquise.

Le procédé de localisation selon l'invention comporte les étapes suivantes :
- émission par l'unité roue 12a à 12d de signaux hautes fréquences représentatifs, au moins, de la pression de la roue 15 sur laquelle l'unité roue est montée, ainsi que d'un code identifiant cette roue,
- réception par l'unité centrale 11 des signaux hautes fréquences émis par l'unité roue 12a à 12d,
le dit procédé étant caractérisé en ce qu'il comporte en outre les étapes suivantes :
- émission d'un signal basses fréquences par au moins un dispositif d'émission 14, 14' monté sur le véhicule selon une position déterminée, de manière à réveiller les unités roues 12 placées à proximité,
- réception de ce signal basses fréquences par les unités roue 12a à 12d et en réponse, émission d'un signal hautes fréquences par les roues réveillées, le dit signal comportant au moins le code identifiant des roues réveillées, et
- réception du signal hautes fréquences par l'unité centrale 11 et association du code identifiant des unités roues réveillées, à la position du ou des dispositifs d'émission.

Bien entendu, la présente invention n'est pas limitée aux modes de réalisation ci-dessus décrits. Ainsi, il est possible de déterminer la position des roues situées sur un des cotés du véhicule en placant les antennes 14, 14' uniquement de ce coté là.

## Revendications

1. Procédé de localisation automatique des roues (15) d'un véhicule automobile (13); le dit véhicule comportant une unité roue (12a à 12d) solidaire de chacune des roues du véhicule et une unité centrale de calcul (11) disposée dans le véhicule, le dit procédé comportant les étapes suivantes :
- émission par l'unité roue (12a à 12d) de signaux hautes fréquences représentatifs, au moins, de la pression de la roue sur laquelle l'unité roue est montée, ainsi que d'un code identifiant cette roue,
- réception par l'unité centrale (11) des signaux hautes fréquences émis par l'unité roue,
le dit procédé étant **caractérisé en ce qu'**il comporte en outre les étapes suivantes :
- émission d'un signal basses fréquences non codé par au moins un dispositif d'émission comportant des antennes (14) disposées dans les portières du véhicule et utilisées par ailleurs, par un .dispositif de commande à distance de l'accès à bord du véhicule, le dit dispositif d'émission étant monté sur le véhicule à proximité des roues selon une position prédéterminée, de manière à réveiller les unités roues placées à proximité,
- réception de ce signal basses fréquences non codé par les unités roue et en réponse, émission d'un signal hautes fréquences par les roues réveillées, le dit signal comportant au moins le code identifiant des roues réveillées, et
- réception du signal hautes fréquences par l'unité centrale (11) et association du code identifiant des unités roues réveillées, à la position du ou des dispositif(s) d'émission.

2. Procédé selon la revendication 1, **caractérisé en ce que** le dit dispositif d'émission comporte également des antennes spécifiques (14') disposées à proximité des roues du véhicule.

3. Procédé selon la revendication 1, **caractérisé en ce que** le dit dispositif d'émission comporte des antennes spécifiques (14') disposées à proximité des roues d'un même essieu.

4. Unité de localisation mettant en oeuvre le procédé selon l'une quelconque des revendications précédentes, la dite unité de localisation comportant une unité centrale de calcul (11) placée dans le véhicule, une unité roue (12a à 12d) solidaire de chacune des roues (15) et au moins un dispositif d'émission (14, 14'), le dit dispositif d'émission étant adapté pour émettre un signal basses fréquences, la dite unité de localisation étant **caractérisée en ce que** le dispositif d'émission est une antenne (14) placée dans les portières d'un véhicule automobile, les dites antennes étant également adaptées pour dialoguer avec un dispositif de commande à distance de l'accès à bord du véhicule.

## Patentansprüche

1. Verfahren zur automatischen Ortung (15) der Räder eines Fahrzeugs (13); wobei das Fahrzeug für jedes der Räder dieses Fahrzeugs mit einer diesem Rad zugeordneten Radeinheit (12a bis 12d) und einer zentralen Rechnereinheit (11), die im Fahrzeug untergebracht ist, ausgestattet ist, und das Verfahren folgende Schritte umfasst:
- Senden von hochfrequenten Signalen durch die Radeinheit (12a bis 12d), wobei die Signale mindestens den Druck des Rades, an dem die Radeinheit montiert ist, sowie einen Code, der dieses Rad identifiziert, anzeigen,
- Empfangen der hochfrequenten Signale, die von der Radeinheit ausgesendet werden, durch die Zentraleinheit,
wobei das Verfahren **dadurch gekennzeichnet ist, dass** es folgende Schritte umfasst:
- Senden eines nicht-kodierten Signals durch mindestens eine Sendevorrichtung, die mit Antennen (14) versehen ist, die in den Türen des Fahrzeugs untergebracht sind und darüber hinaus für eine ferngesteuerte Vorrichtung für den Zutritt zum Fahrzeug genutzt werden, wobei die Sendevorrichtung am Fahrzeug in der Nähe der Räder an einer vorher festgelegten Position so angebracht ist, dass die Radeinheiten, die in der Nähe platziert sind, aktiviert werden,
- Empfangen dieser niederfrequenten nicht-kodierten Signale durch die Radeinheiten und im Gegenzug Senden eines hochfrequenten Signals durch die aktivierten Räder, wobei das Signal mindestens den Code beinhalten muss, der die aktivierten Räder identifiziert, und
- Empfangen des hochfrequenten Signals durch die Zentraleinheit (11) und Zuordnen des Codes, der die aktivierten Radeinheiten identifiziert, zur Position der Sendevorrichtung(en).

2. Verfahren nach Anspruch 1, **dadurch gekennzeichnet, dass** die Sendevorrichtung auch spezielle Antennen (14') umfasst, die sich in der Nähe der Räder des Fahrzeugs befinden.

3. Verfahren nach Anspruch 1, **dadurch gekennzeichnet, dass** die Sendevorrichtung spezielle Antennen (14') umfasst, die sich in der Nähe der Räder der gleichen Achse befinden.

4. Ortungsvorrichtung, bei der das Verfahren nach einem der vorgenannten Ansprüche umgesetzt wird, wobei die Ortungsvorrichtung eine zentrale Rechnereinheit (11), die im Fahrzeug untergebracht ist, für jedes der Räder dieses Fahrzeugs eine diesem Rad (15) zugeordnete Radeinheit (12a bis 12d) und mindestens eine Sendevorrichtung (14, 14') umfasst, wobei die Sendevorrichtung so ausgelegt ist, dass sie ein niederfrequentes Signal aussendet, die Ortungsvorrichtung **dadurch gekennzeichnet ist, dass** die Sendevorrichtung eine Antenne (14) ist, die in den Türen eines Fahrzeugs untergebracht ist, die Antennen ebenfalls so ausgelegt sind, dass sie mit einer ferngesteuerten Vorrichtung für den Zutritt zum Fahrzeug kommunizieren können.

## Claims

1. Method for automatically locating the wheels (15) of a motor vehicle (13); said vehicle having a wheel unit (12a to 12d) attached to each of the wheels of the vehicle and a central processing unit (11) on board the vehicle, said method including the following stages:
- transmission by the wheel unit (12a to 12d) of high-frequency signals representing, at least, the pressure of the wheel on which the wheel unit is mounted, as well as a code identifying this wheel,
- reception by the central unit (11) of the high-frequency signals transmitted by the wheel unit,
said method being **characterised in that** it also includes the following stages:
- transmission of an unencoded low-frequency signal by at least one transmission device that includes antennas (14) placed in the doors of the vehicle and also used by a remote-control access device on board the vehicle, said transmission device being mounted on the vehicle near to the wheels in a predetermined position to enable the wheel units located nearby to be woken,
- reception of this unencoded low-frequency signal by the wheel units and in response, transmission of a high-frequency signal by the wheels woken, said signal including at least the code identifying the wheels woken, and
- reception of the high-frequency signal by the central unit (11) and association of the code identifying the wheel units woken with the position of the transmission device or devices.

2. Method according to Claim 1, **characterised in that** said transmission device also includes specific antennas (14') placed near to the wheels of the vehicle.

3. Method according to Claim 1, **characterised in that** said transmission device includes specific antennas (14') placed near to the wheels of a single axle.

4. Locating unit implementing the method according to any one of the claims above, said locating unit including a central processing unit (11) placed in the vehicle, a wheel unit (12a to 12d) attached to each of the wheels (15) and at least one transmission device (14, 14'), said transmission device being designed to transmit a low-frequency signal, said locating unit being **characterised in that** the transmission device is an antenna (14) placed in the doors of a motor vehicle, said antennas also being designed to communicate with a remote-control access device on board the vehicle.
